# EUROPÄISCHE PATENTSCHRIFT

(11) **EP 1 122 050 B1**
(45) Veröffentlichungstag und Bekanntmachung des Hinweises auf die Patenterteilung: **27.07.2005**
(21) Anmeldenummer: 01890021.7
(22) Anmeldetag: 24.01.2001
(51) Int. Cl.: B29C 47/90, B29C 47/88

(54) **Vorrichtung zum kalibrierenden Abkühlen eines stranggepressten Kunststoffprofils**
Apparatus for cooling and calibrating an extruded plastic profile
Dispositif de refroidissement et de calibrage pour un profile extrudé en matière plastique

(30) Priorität: 01.02.2000 AT 1462000
(43) Veröffentlichungstag der Anmeldung: 08.08.2001
(73) Patentinhaber: A + G Extrusion Technology GmbH, 4061 Pasching (AT)
(72) Erfinder: Krumböck, Erwin, Dr., 4052 Ansfelden (AT); Gasselseder, Wolfgang, 4181 Oberneukirchen (AT)
(74) Vertreter: Hübscher, Helmut, Dipl.-Ing.

(56) Entgegenhaltungen:
- EP-A- 0 659 536
- EP-A- 0 811 472
- EP-A- 0 925 905
- DE-C- 19 707 712

## Beschreibung

Die Erfindung bezieht sich auf eine Vorrichtung zum kalibrierenden Abkühlen eines stranggepreßten Kunststoffprofils mit einem über Kühlwasserzu- und -ableitungen kühlwasserdurchströmbaren Wassertank, welcher sich in Strangrichtung längserstreckende Wassertank durch in Strangrichtung hintereinandergereihte, gegenseitig beabstandete Kalibrierblenden für das Kunststoffprofil in einzelne Kühlkammern unterteilt ist.

Bei der Extrusion von Kunststoffprofilen, beispielsweise Fensterprofilen aus PVC, wird der Profilstrang nach dem Extruder und der formgebenden Profildüse zur maßhaltigen Abkühlung meist zuerst durch einen Trockenkalibrator und dann durch einen Naßkalibrator geführt, wobei die Naßkalibratoren entweder mit einem Sprühbad oder einem Vollbad arbeiten. Sprühbäder, bei denen Kühlwasser auf den abzukühlenden Profilstrang über eine Mehrzahl von Sprühdüsen aufgesprüht wird, bringen zwar einen hohen Kühleffekt mit sich, doch sind sie recht aufwendig, wegen der Verstopfungsgefahr der Düsen störanfällig und zudem mit einem hohen Wasserverbrauch verbunden. In Vollbädern wird der zu kühlende Kunststoffstrang hingegen durch einen kühlwasserbefüllten Wassertank geführt und dabei durch Kalibrierblenden gezogen, wodurch es zu einem geringeren Bauaufwand und zu einem niedrigeren Wasserverbrauch kommt, die Kühlwirkung allerdings unbefriedigend bleibt.

Um den Kühleffekt zu verbessern, wurde gemäß der EP 0 659 536 B bereits vorgeschlagen, die Kalibrierblenden des Wassertanks zusätzlich zu den Blendenöffnungen mit weiteren Öffnungen zur Erzeugung einer turbulenten Strömung des Kühlwassers in den Kühlkammern zu versehen. Diese Kühlwasserströmung erfordert einen Differenzdruck zwischen Ein- und Ausströmseite der Kalibrierblenden, wobei im Wassertank nur ein sehr begrenzter Differenzdruck zur Verfügung steht und es daher nur zu einer mäßigen Verwirbelung des Kühlwassers bei der Durchströmung dieser Turbulenzöffnungen kommt. Der durch die turbulente Strömung erzielbare zusätzliche Kühleffekt ist demnach ungenügend. Außerdem muß das gesamte Kühlwasser die einzelnen Kammern durchströmen, wodurch eine Anpassung der Kühlwassermenge in den Kühlkammern an den tatsächlichen Kühlbedarf unmöglich und eine Minimierung des Kühlwasserverbrauches nicht zu erreichen ist. Wird weiters zur Erhöhung der Geometriehaltigkeit des Profils der Wassertank unterdruckbeaufschlagt, sind aufgrund der großen strömenden Wassermengen in Verbindung mit der angesaugten Falschluft unerwünschte Fluktuationen zu befürchten, die zu Druckschwankungen und damit zu negativen Auswirkungen auf die Profilgeometrie führen.

Ähnliche Verhältnisse ergeben sich bei einer Kühlvorrichtung gemäß der DE 195 04 981 A, die einen unterdruckbeaufschlagten Wassertank aufweist, der durch Kalibrierblenden in Kammern unterteilt ist, wobei zusätzliche Längswände an der Unterseite des Profilstranges zusammen mit abwechselnd seitlich angeordneten Durchströmöffnungen eine Kühlwasserströmung nicht nur dem Profilstrang entlang, sondern auch um den Profilstrang herum erzwingen.

Aus der EP 0 811 472 A ist auch schon eine Kalibriervorrichtung mit einem durch Kalibrierblenden unterteilten Wassertank bekannt, dessen Kühlflüssigkeitsstrom so gering eingestellt wird, daß sich eine laminare Strömungsgrenzschicht am Profilstrang ergibt, welche Grenzschicht beim Durchgang durch die Kalibrierblenden abgestreift und damit die gewünschte Wärmeabfuhr erreicht werden soll. Ob hier jedoch unter Vermeidung erzwungener Turbulenzen die Kühlwirkung zu verbessern ist, muß bezweifelt werden. Außerdem können Zonen entstehen, in denen das Kühlwasser überdurchschnittlich lange verweilt und höhere Temperaturen annimmt, wodurch der Kühleffekt auf jeden Fall leidet.

Der Erfindung liegt daher die Aufgabe zugrunde, eine Vorrichtung der eingangs geschilderten Art zu schaffen, die bei verhältnismäßig geringem Bauaufwand ein rationelles und doch hochwirksames Strangkühlen gewährleistet.

Die Erfindung löst diese Aufgabe dadurch, daß in jeder Kühlkammer eine Kühlwasserzuleitung ausmündet und die Kühlkammern jeweils mittels einer Abflußöffnung an eine Kühlwasserableitung angeschlossen sind. Durch diese Kühlwasserführung werden die Kühlkammern jeweils für sich kühlwasserbeaufschlagt, so daß die Kühlwirkung bestens an den tatsächlichen Kühlbedarf angepaßt werden kann. Damit läßt sich auch die Kühlwasserzuflußmenge gezielt auf die minimal erforderliche Kühlwassermenge abstimmen und es kommt zu einem überaus sparsamen Wasserverbrauch. Außerdem bringt das Ausströmen des Kühlwassers aus den Mündungsöffnungen der Kühlwasserzuleitung entsprechende Turbulenzströmungen in den Kammern mit sich, die zu einem Wärmeausgleich des Wassers in den Kühlkammern führen und die Strangkühlung in Folge turbulent strömender Oberflächenschichten beträchtlich steigern. Aufgrund der Kühlwasserzuströmung in jede Kammer und der dadurch erzwungenen Kühlwasserabströmung wird der Zufluß bereits erwärmten Kühlwassers aus anderen Kühlkammern unterbunden und damit eine Beeinträchtigung der Kühlwirkung in den Kammern sicher verhindert. Nicht zuletzt ist die individuelle Kühlwasserbeaufschlagung der Kühlkammern weitgehend unabhängig vom Druckniveau im Wassertank und eignet sich damit bestens zur Kombination mit einem Unterdrucktank zur Steigerung der Maßhaltigkeit beim Abkühlen des Profilstranges.

Besteht die Kühlwasserzuleitung aus einem dem Wassertank entlang verlegten Leitungsrohr, das im Bereich der Kühlkammern jeweils wenigstens eine Ausströmbohrung oder -düse aufweist, kann in aufwandsarmer Weise für eine ausreichende Wasserzufuhr zu den einzelnen Kühlkammern gesorgt werden, wobei sich durch Variation der Anzahl und/oder der Durchmesser dieser Ausströmbohrungen die zuströmende Wassermenge und die Strömungsintensität und Turbulenz des Wasserflusses je Kammer einstellen und damit die Kühlströmung innerhalb der Kammern beeinflussen lassen.

An sich könnten eigene Rohrleitungen für die Kühlwasserableitung vorgesehen sein, doch vorteilhafter ist es, wenn als Kühlwasserableitung ein sich oberhalb und/oder unterhalb der Kalibrierblenden in Tanklängsrichtung erstrekkender Abflußkanal vorgesehen ist und die nach oben bzw. unten offenen Kühlkammern mit ihren dem (den) Abflußkanal (-kanälen) zugeordneten Offenseiten die Abflußöffnungen bilden. Dadurch braucht im Wassertank lediglich zwischen den Kalibrierblenden und dem Tankdeckel und/oder zwischen den Kalibrierblenden und dem Tankboden ein ausreichender Freiraum für das abströmende Kühlwasser freigelassen zu werden und das Kühlwasser kann nahezu drucklos abfließen. Je nach Bauweise des Wassertanks bzw. je nach Einsatz der Kalibrierblenden läßt sich so auf rationelle Weise der Abflußkanal im Deckel- oder im Bodenbereich einrichten und es ist selbstverständlich auch möglich, Abflußkanäle sowohl im Deckel- als auch im Bodenbereich vorzusehen, um den Kühlwasserabfluß weiter zu begünstigen und dabei die Strömungsgeschwindigkeit gering zu halten.

Sind die Abflußöffnungen mit einer Lochplatte od. dgl. überdeckt, wird ein ungewolltes Einströmen bereits erwärmten Kühlwassers aus benachbarten Kammern aufgrund der mit den Lochplatten erhöhten Strömungswiderstände sicher verhindert.

Nach einer weiteren Ausgestaltung der Erfindung ist den Kühlkammern in Strömungsrichtung der Kühlwasserableitung eine zuleitungsfreie Abzugskammer nachgeordnet, in die die Kühlwasserableitung über einen durch die Kalibrierblende zwischen Abzugskammer und benachbarter Kühlkammer gebildeten Überlauf mündet und von der zwei Saugleitungen, eine untere Wassersaugleitung und eine obere Luftsaugleitung, ausgehen. Da die gesamte Kühlwassermenge über den Überlauf abfließen muß, läßt sich durch die Höhenlage dieses Überlaufes der Wasserspiegel in den Kühlkammern vorgeben. Weiters wird durch die Abzugskammer die Voraussetzung für eine einfache getrennte Absaugung von Wasser und Luft geboten, wobei die untere Saugleitung nahezu kontinuierlich Wasser fördert und die obere Saugleitung im wesentlichen Luft und gegebenenfalls Sprühwasser absaugt, so daß es daher auch keine Druckschwankungen aufgrund eines gemeinsamen Wasser-Luftabzuges im Wassertank gibt. Damit ist es auch möglich, einen eigenen Trenntank zum Separieren von Luft und Wasser zu vermeiden, ohne die Vakuumpumpe durch einen zu hohen Wasseranteil in der abgesaugten Luft zu gefährden.

In der Zeichnung ist der Erfindungsgegenstand rein schematisch veranschaulicht, und zwar zeigen
Fig. 1 und 2 eine erfindungsgemäße Vorrichtung im Längsschnitt bzw. im Querschnitt und
Fig. 3 und 4 ein etwas abgeändertes Ausführungsbeispiel ebenfalls im Längsschnitt bzw. im Querschnitt.

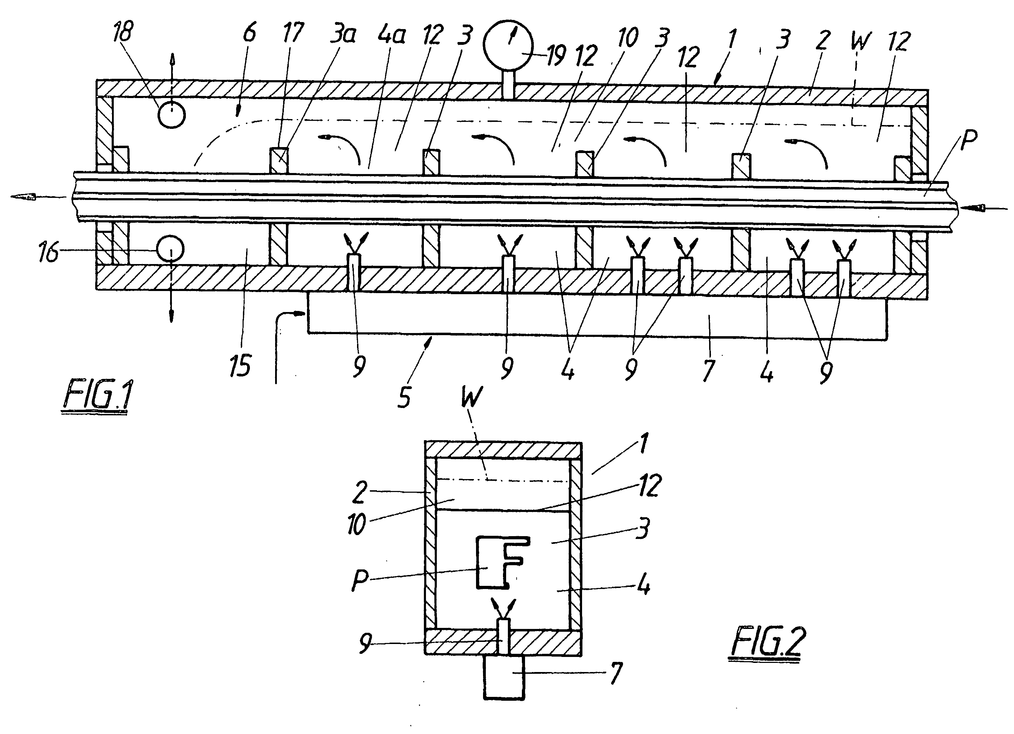

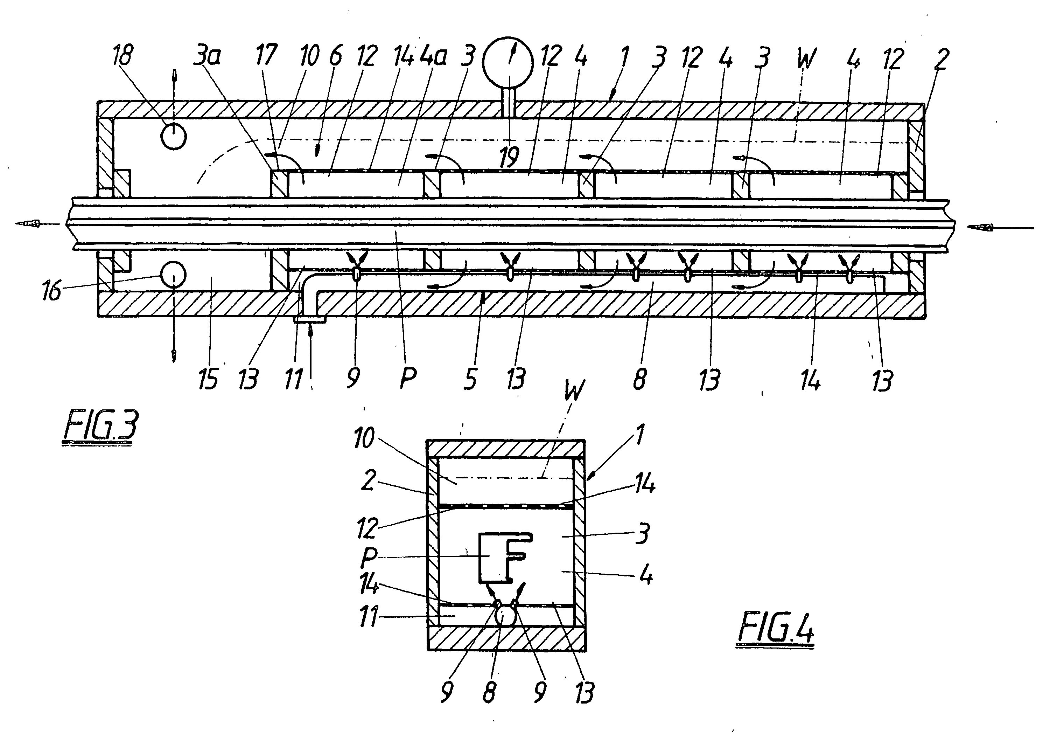

Eine Vorrichtung 1 zum kalibrierenden Abkühlen eines stranggepreßten Kunststoffprofils P umfaßt einen Wassertank 2, der durch in Strangrichtung hintereinandergereihte, gegenseitig beabstandete Kalibrierblenden 3 für das Kunststoffprofil P in einzelne Kühlkammern 4 unterteilt ist. Den Wassertank 2 durchströmt Kühlwasser, das über eine Kühlwasserzuleitung 5 zu- und eine Kühlwasserableitung 6 abfließt. Die Kühlwasserzuleitung 5 besteht dabei aus einem dem Wassertank 2 entlang verlegten äußeren Leitungsrohr 7 (Fig. 1 und 2) oder aus einem dem Wassertank 2 entlang verlegten inneren Leitungsrohr 8 (Fig. 3 und 4), welches Leitungsrohr im Bereich der Kühlkammern 4 jeweils wenigstens eine Ausströmdüse 9 aufweist. Die Kühlwasserableitung 6 umfaßt einen sich oberhalb der Kalibrierblenden 3 in Tanklängsrichtung erstreckenden Abflußkanal 10 (Fig. 1 und 2) oder sich oberhalb und unterhalb der Kalibrierblenden in Tanklängsrichtung erstreckende Abflußkanäle 10, 11(Fig. 3 und 4), wobei die nach oben bzw. unten offenen Kühlkammern 4 mit den entsprechenden oberen bzw. unteren Offenseiten an die Abflußkanäle 10, 11 anschließende Abflußöffnungen 12, 13 bilden. Wie im Ausführungsbeispiel nach Fig. 3 und 4 angedeutet, können diese Abflußöffnungen 12, 13 mit Lochplatten 14 überdeckt sein, um durch den damit verbundenen erhöhten Strömungswiderstand ein ungewolltes Einfließen von Kühlwasser aus benachbarten Kammern zu verhindern.

Die Kühlkammern 4 werden durch die auf die einzelnen Kammern abgestimmten Kühlwasserzu- und -ableitungen 5, 6 jeweils für sich kühlwasserbeaufschlagt, so daß eine an die jeweiligen Abkühlverhältnisse in den einzelnen Kammern gut anpaßbare Kühlwirkung zustande kommt, wobei sich die Kühlwassermenge pro Kammer durch die Anzahl und den Querschnitt der Düsen einstellen läßt und sich durch das Ausströmen des Kühlwassers aus den entsprechenden Ausströmdüsen 9 Turbulenzen und eine gute Wasserdurchmischung zur Verbesserung der Kühleffekte ergeben. Das Kühlwasser strömt aus den einzelnen Kühlkammern 4 durch die Abflußöffnungen 12, 13 in den oberen bzw. unteren Abflußkanal 10, 11 und gelangt so in eine den Kühlkammern 4 in Strömungsrichtung nachgeordnete Abzugskammer 15, aus der es über eine Wassersaugleitung 16 abgesaugt wird. Die Kalibrierblende 3a zwischen der Abzugskammer 15 und der benachbarten Kühlkammer 4a bildet dabei einen Überlauf 17, über den die Abflußkanäle in die Abzugskammer 15 münden, so daß mittels des Überlaufes 17 auch der Wasserstand W in den Kühlkammern 4 beeinflußt werden kann.

Um beim Abkühlen eine maßhaltige Führung des Kunststoffprofils P in den Kalibrierblenden 3 zu gewährleisten, läßt sich der Wassertank 2 unterdruckbeaufschlagen, wozu es eine an eine nicht weiter dargestellte Vakuumpumpe angeschlossene Luftsaugleitung 18 gibt, welcher Unterdruck über ein Manometer 19 kontrollierbar ist. Sind die Saugleitungen, nämlich die untere Wassersaugleitung 16 und die obere Luftsaugleitung 18, in der Abzugskammer 15 angeordnet, kommt es zu einer ausreichenden Trennung der Luft- bzw. Wasserabsaugung innerhalb des Wassertanks 2 und die Saugleitungen 16, 18 können ohne Zwischenschaltung eines Trenntanks od. dgl. direkt an Vakuum- bzw. Wasserpumpen angeschlossen werden.

## Patentansprüche

1. Vorrichtung (1) zum kalibrierenden Abkühlen eines stranggepreßten Kunststoffprofils (P) mit einem über Kühlwasserzu- und -ableitungen (5, 6) kühlwasserdurchströmbaren Wassertank (2), welcher sich in Strangrichtung längserstreckende Wassertank (2) durch in Strangrichtung hintereinandergereihte, gegenseitig beabstandete Kalibrierblenden (3) für das Kunststoffprofil (P) in einzelne Kühlkammern (4) unterteilt ist, **dadurch gekennzeichnet, daß** in jede Kühlkammer (4) eine Kühlwasserzuleitung (5) ausmündet und die Kühlkammern (4) jeweils mittels einer Abflußöffnung (12, 13) an eine Kühlwasserableitung (6) angeschlossen sind.

2. Vorrichtung nach Anspruch 1, **dadurch gekennzeichnet, daß** die Kühlwasserzuleitung (5) aus einem dem Wassertank (2) entlang verlegten Leitungsrohr (7, 8) besteht, das im Bereich der Kühlkammern (4) jeweils wenigstens eine Ausströmbohrung oder -düse (9) aufweist.

3. Vorrichtung nach Anspruch 1 oder 2, **dadurch gekennzeichnet, daß** als Kühlwasserableitung (6) ein sich oberhalb und/oder unterhalb der Kalibrierblenden (3) in Tanklängsrichtung erstreckender Abflußkanal (10, 11) vorgesehen ist und die nach oben bzw. unten offenen Kühlkammern (4) mit ihrem dem (den) Abflußkanal (10, 11) (-kanälen) zugeordneten Offenseiten die Abflußöffnungen (12, 13) bilden.

4. Vorrichtung nach Anspruch 3, **dadurch gekennzeichnet, daß** die Abflußöffnungen (12, 13) mit einer Lochplatte (14) od. dgl. überdeckt sind.

5. Vorrichtung nach einem der Ansprüche 1 bis 4, **dadurch gekennzeichnet, daß** den Kühlkammern (4) in Strömungsrichtung der Kühlwasserableitung (6) eine zuleitungsfreie Abzugskammer (15) nachgeordnet ist, in die die Kühlwasserableitung (6) über einen durch die Kalibrierblende (3a) zwischen Abzugskammer (15) und benachbarter Kühlkammer (4a) gebildeten Überlauf (17) mündet und von der zwei Saugleitungen, eine untere Wassersaugleitung (16) und eine obere Luftsaugleitung (18), ausgehen.

## Claims

1. Apparatus (1) for cooling and calibrating an extruded plastic profile (P) with a water tank (2) through which cooling water flows by means of cooling water supply and removal pipelines (5, 6), said water tank (2) extending lengthwise in the extrusion direction being divided into individual cooling chambers (4) through calibration orifices (3) for the plastic profile (P) arranged spaced apart in a row behind one another in the extrusion direction, **characterised in that** a water supply pipeline (5) runs into each cooling chamber (4) and the cooling chambers (4) are each connected to a cooling water removal pipeline (5) by means of a discharge opening (12, 13).

2. Apparatus according to Claim 1, **characterised in that** the cooling water supply pipeline (5) consists of a pipe (7, 8) arranged along the water tank (2) and having in the region of the cooling chambers (4) at least one discharge hole or nozzle (9).

3. Apparatus according to Claim 1 or 2, **characterised in that** a discharge channel (10, 11) extending above and / or below the calibration orifices (3) in the lengthwise direction of the tank is provided as a cooling water removal pipeline and the cooling chambers (4) which are open above or below (4) form the discharge openings (12, 13) with their open sides assigned to the discharge channel (s) (10, 11).

4. Apparatus according to Claim 3, **characterised in that** the discharge openings (12, 13) are covered with a swage block (14) or similar.

5. Apparatus according to one of the Claims 1 to 4, **characterised in that** a supply line-free drainage chamber (15) is arranged downstream of the cooling chambers (4) in the flow direction of the cooling water removal pipeline (6), into which drainage chamber (15) the cooling water removal pipeline (6) runs by means of an overflow (18) formed by the calibration orifice (3a) between the discharge chamber (15) and adjacent cooling chamber (4a), from which drainage chamber (15) two suction pipelines run, a lower water suction pipeline (16) and an upper air suction pipeline (18) run.

## Revendications

1. Dispositif (1), pour effectuer le refroidissement à effet calibreur d'un profilé en matière synthétique (P) obtenu par extrusion, avec un réservoir d'eau (2), susceptible d'être traversé par un écoulement d'eau de refroidissement, par l'intermédiaire de conduites d'amenée et d'évacuation d'eau de refroidissement (5, 6), le réservoir d'eau (2), s'étendant dans la direction d'extrusion, étant subdivisé en chambres de refroidissement (4) individuelles, au moyens d'écrans de calibrage (3), alignés en rangée les uns derrière les autres dans la direction d'extrusion, espacés mutuellement les uns des autres, pour le profilé en matière synthétique (P), **caractérisé en ce que**, dans chaque chambre de refroidissement (4), débouche une conduite d'amenée d'eau de refroidissement (5) et les chambres de refroidissement (4) sont chacune raccordées à une conduite d'évacuation d'eau de refroidissement (6), à l'aide d'une ouverture d'évacuation (12, 13).

2. Dispositif selon la revendication 1, **caractérisé en ce que** la conduite d'amenée d'eau de refroidissement (5) est formée d'un tube de conduite (7, 8), posé le long du réservoir d'eau (2) et présentant, dans la zone des chambres de refroidissement (4), chaque fois au moins un perçage ou une buse de sortie d'écoulement (9).

3. Dispositif selon la revendication 1 ou 2, **caractérisé en ce qu'**est prévu, en tant que conduite d'évacuation d'eau de refroidissement (6), un canal d'évacuation (10, 11) s'étendant au-dessus et/ou au-dessous des écrans de calibrage (3), dans la direction longitudinale du réservoir et les chambres de refroidissement (4), ouvertes vers le haut ou vers le bas, forment, par leurs faces ouvertes associées au canal (aux canaux) d'évacuation de fluide (10, 11), les ouvertures d'évacuation (12, 13).

4. Dispositif selon la revendication 3, **caractérisé en ce que** les ouvertures d'évacuation (12, 13) sont recouvertes d'une plaque perforée (14) ou analogues.

5. Dispositif selon l'une des revendications 1 à 4, **caractérisé en ce que**, en aval des chambres de refroidissement (4), dans la direction d'écoulement de la conduite d'évacuation d'eau de refroidissement (6), est disposée une chambre d'extraction (15), exempte de conduite d'amenée, dans laquelle la conduite d'évacuation d'eau de refroidissement (6) débouche, par l'intermédiaire d'un trop plein (17), formé par l'écran de calibrage (3a) disposé entre la chambre d'extraction (15) et la chambre de refroidissement (4a) voisine, et d'où partent deux conduites d'aspiration, une conduite d'aspiration d'eau (16) et une conduite d'aspiration d'air supérieure (18).
